# EUROPÄISCHE PATENTSCHRIFT

(11) **EP 1 209 246 B1**
(45) Veröffentlichungstag und Bekanntmachung des Hinweises auf die Patenterteilung: **09.01.2008**
(21) Anmeldenummer: 01126260.7
(22) Anmeldetag: 06.11.2001
(51) Int. Cl.: C23C 4/12, C23C 4/08, C22C 38/18, C22C 38/34, C23C 4/06, B05D 1/02, B05D 1/08

(54) **Verfahren zur Herstellung von verschleiss- und/oder korrosionsfesten Oberflächenbeschichtungen sowie Mittel zur Durchführung desselben**
Method for surface coating resisting to wear and corrosion, and means for performing the method
Procédé de revêtement de surface résistant à l'usure et/ou à la corrosion, et moyens pour le réaliser

(30) Priorität: 07.11.2000 DE 10055048
(43) Veröffentlichungstag der Anmeldung: 29.05.2002
(73) Patentinhaber: Sulzer Metco OSU GmbH, 47169 Duisburg (DE)
(72) Erfinder: Krüger, Jürgen, Dipl.-Ing., 45145 Essen (DE); Knepper, Michael, Dr., 45470 Mühlheim an der Ruhr (DE)
(74) Vertreter: Werner, Hans-Karsten

(56) Entgegenhaltungen:
- EP-A- 0 933 443
- DE-A- 19 845 349

## Beschreibung

Gegenstand der vorliegenden Erfindung ist ein Verfahren zur Herstellung von verschleiß- und/oder korrosionsfesten Oberflächenbeschichtungen durch thermisches Spritzen von Stahllegierungen.

Weiterhin betrifft die Erfindung Mittel zur Durchführung des Verfahrens.

Ein gattungsgemäßes Verfahren ist bekannt aus der DE-A-198 03 084, in der die Verwendung von Pulver einer Stahllegierung beschrieben ist mit mehr als 20 bis 50% Chrom, mehr als 3 bis 10 Gew.-% Silizium, wobei der Rest Eisen einschließlich unvermeidbarer Verunreinigungen ist, zum thermischen Beschichten von Metallteilen, die im Betrieb dem Korrosionsangriff durch chlor- und/oder chlorid- und/oder sulfathaltigen Medien ausgesetzt sind. Es handelt sich somit insbesondere um Beschichtungen auf Metallbauteilen, die bei heißen chlor-und/oder chlorid- und/oder sulfathaltigen Medien zum Einsatz kommen sollen, beispielsweise bei der thermischen Müllentsorgung oder der Kupferraffinierung.

Die Eisen-Chrom-Silizium-Legierungen zum Beschichten werden beispielsweise durch direktes Verdüsen der Legierungsschmelze oder durch Induktionsabtropfschmelzen stabförmige Elektroden aus der entsprechenden Legierung hergestellt. Aufgetragen wird das Pulver durch thermische Spritzverfahren, und zwar mittels Flammspritzen einschließlich Hochgeschwindigkeitsflammspritzen.

Bei der Pulverspritztechnologie wird der Werkstoff in Form von Pulver in einer energiereichen Wärmequelle geschmolzen und durch geeignete Mittel in Form feiner Tröpfchen auf die Bauteiloberfläche aufgespritzt.

Einfacher, preiswerter und bezüglich der Schichtdicken leichter reproduzierbar ist aber die sogenannte Drahtspritztechnologie, bei der der Draht in einer energiereichen Wärmequelle geschmolzen und durch geeignete Mittel in Form feiner Tröpfchen auf die Bauteiloberfläche aufgespritzt wird.

Die gemäß DE-A-198 03 084 brauchbaren Legierungen sind aber nicht geeignet, zu einem Draht verarbeitet zu werden, weshalb bisher nur die Pulverspritztechnologie zur Anwendung kommen konnte.

Die Erfindung hat sich zunächst die Aufgabe gestellt, Beschichtungen gemäß DE-A-198 03 084 leichter, preiswerter und zuverlässiger herzustellen und dabei auch die Drahtspritztechnologie einsetzen zu können. Weiterhin hat sie sich die Aufgabe gestellt, Korrosionsschutz auch auf anderen Anwendungsgebieten zu entwickeln.

Diese Aufgabe wurde jetzt gelöst durch ein Verfahren gemäß Anspruch 1, d.h. bei einem Verfahren, bei dem das Spritzen erfolgt unter Verwendung von Fülldrähten bestehend aus einer Stahlhülle und einer pulverförmigen Füllung, welche die der Stahlhülle fehlenden Legierungskomponenten der Oberflächenbeschichtung enthält.

Die Hülle dieser Fülldrähte besteht vorzugsweise aus einem nahtlosen Rohr, einem geschweißten Rohr oder aus einem gefalzten Band.

Die Füllung des Fülldrahtes besteht vorzugsweise aus Eisen, Chrom, Silizium, Bor, Molybdän, Niobium, Mangan, Kohlenstoff, Nickel, Kobalt, Cer, Hafnium, Zirkonium und/oder Yttrium.

Die Dimension der Hülle und die Menge der Füllung des Fülldrahtes werden vorzugsweise so aufeinander abgestimmt, dass die resultierende Legierung besteht aus
- 26 - 34 Gew.-% Chrom,
- 4 - 8 Gew.-% Silizium,
- 1 - 2.5 Gew.-% Bor
- 1 - 7.5 Gew.-% Molybdän
- 1 bis 4 Gew.-% Mangan,
- bis 0,15 Gew.-% Kohlenstoff,
- bis 30 Gew.-% Nickel
und der Rest, mindestens jedoch 10 Gew.-%, Eisen einschließlich der nicht vermeidbaren Verunreinigungen.

Besonders bevorzugt sind Fülldrähte, bei denen die resultierende Legierung zusätzlich enthält
- bis 5 Gew.-% Niobium,
- bis 4 Gew.-% Kobalt,
- bis 0,5 Gew.-% Cer,
- bis 0,5 Gew.-% Hafnium,
- bis 0,5 Gew.-% Zirkonium,
- bis 1 Gew.-% Yttrium.

Besonders bevorzugt sind resultierende Legierungen, welche
- 2 - 4 Gew.-% Mangan
enthalten.

Das Verfahren unter Verwendung der speziellen Fülldrähte erfolgt vorzugsweise im Lichtbogen-Drahtspritzen oder Flamm-Drahtspritzen, wobei auch Hochgeschwindigkeitslichtbogen-Drahtspritzen und Hochgeschwindigkeitsflamm-Drahtspritzen in Frage kommen.

Gegenstand der vorliegenden Erfindung sind auch die Fülldrähte zur Durchführung des Verfahrens bestehend aus einer Stahlhülle und einer pulverförmigen Füllung, welche die der Stahlhülle fehlenden Komponenten der Oberflächenbeschichtung enthält. Vorzugsweise handelt es sich um Fülldraht, bei dem die Hülle und die Füllung zusammen enthalten
- 26 bis 34 Gew.-% Chrom,
- 4 bis 8 Gew.-% Silizium,
- 1 bis 2.5 Gew.-% Bor,
- 1 bis 7.5 Gew.-% Molybdän,
- 1 bis 4 Gew.-% Mangan,
- bis 0,15 Gew.-% Kohlenstoff,
- bis 30 Gew.-% Nickel
und der Rest Eisen, mindestens jedoch 10 Gew.-% einschließlich der nicht vermeidbaren Verunreinigungen.

Schließlich sind besonders bevorzugt Fülldrähte, bei denen Hülle und Füllung zusammen enthalten
- bis 5 Gew.-% Niobium,
- bis 4 Gew.-% Kobalt,
- bis 0,5 Gew.-% Cer,
- bis 0,5 Gew.-% Hafnium,
- bis 0,5 Gew.-% Zirkonium,
- bis 1 Gew.-% Yttrium.

Schließlich wurde festgestellt, dass die erfindungsgemäß hergestellten Oberflächenbeschichtungen auch auf dem Gebiet des Korrosionsschutzes einsetzbar sind für nasse, salzhaltige Medien bei Raumtemperatur. Dabei können sie bezüglich ihrer Eigenschaften verbessert werden durch zusätzliches Versiegeln mit einem Zweikomponenten-Epoxidharz. Dieses Ergebnis war überraschend, da die Versiegelung mit üblichen Oberflächenbeschichtungen beispielsweise auf Basis von acetonlöslichen Bakelitharzen zu keiner weiteren Verbesserung der Eigenschaften führt. Es gibt bisher keine Erklärung für diese unterschiedlichen Eigenschaften bei der Versiegelung mit üblichen Beschichtungen sowie speziellen Zweikomponenten-Epoxidharzen.

Das erfindungsgemäße Verfahren und die dazu verwendeten Fülldrähte sind in den nachfolgenden Beispielen näher erläutert.

### Beispiele

Fülldrähte bestehend aus einer Hülle und einer Pulverfüllung wurden hergestellt, wobei Hülle und Füllung pro laufende Länge des Drahtes zu folgenden Zusammensetzungen geführt haben:
OSU 3552 Fe 29,00Cr 5,00Si 1,00B 3,50Mn 1,10Ni 1,30Mo 0,060C

Probebleche der Abmessungen 100 x 50 x 2 mm (ST37) wurden einmal dicker und einmal dünner mit einem Lichtbogen-Spritzgerät beschichtet und teilweise auch noch mit einem Korrosionslack versiegelt. Zum Vergleich wurden Probebleche beschichtet mit einer Nickelbasislegierung, OSU 0602. Es handelt sich um einen handelsüblichen aber teuren Schweißdraht aus dem Werkstoff 2.4831 mit der Richtanalyse (in Gew.-%) Ni: ≥ 60 Cr: 20-22, Fe: ≤ 2,0, C: ≤ 0,05, Mn: ≤ 0,5, Si: ≤ 0,5, Mo: 8-10,0, Co ≤ 1,0; AI ≤ 0,3; Ti: ≤ 0,4; Nb: ≤ 3,2 - 4,1

Getestet wurden somit folgende Proben:
1. Schicht OSU 3552 dünn, nicht versiegelt
2. Schicht OSU 3552 dick, nicht versiegelt
3. Schicht OSU 3552 dünn, versiegelt mit ketongelöstem Bakelitlack (OSU P10)
4. Schicht OSU 3552 dick, versiegelt mit OSU P10
5. Schicht OSU 3552 dünn, versiegelt mit zweikomponentigem Epoxidharz (OSU OS)
6. Schicht OSU 3552 dick, versiegelt mit OSU OS
7. Schicht OSU 0602 dünn, nicht versiegelt
8. Schicht OSU 0602 dick, nicht versiegelt
9. Schicht OSU 0602 dünn, versiegelt mit OSU P10
10. Schicht OSU 0602 dick, versiegelt mit OSU P10
11. Schicht OSU 0602 dünn, versiegelt mit OSU OS
12. Schicht OSU 0602 dick, versiegelt mit OSU OS

Die Proben wurden bis zu 3 Wochen im Salzsprühtest nach DIN 50021 SS ausgelagert. Die Untersuchung ergab, dass durch eine Beschichtung mit den Legierungen OSU 0602 und OSU 3552 sowohl dünn wie dick bereits nach 21,5 Stunden auf den Proben flächiger Rotrost entstanden war. Zum weiteren Vergleich wurden Platten aus massiven Alloy 625 und Alloy 316 getestet. Diese Legierungen haben folgende Zusammensetzung:
Alloy 625 2.4856, Ni Cr22 Mo9 Nb
Alloy 316 Stahl 316 L, 1.4430, X2 CrNiMo 19 12

Es handelt sich um sehr teure aber im Salzsprühtest bewährte korrosionsbeständige Materialien.

Die Beschichtungen mit OSU 0602 und Versiegelungen mit einem ketongelösten Bakelitlack und einer zweikomponentigen Epoxidlackierung zeigten auch nach drei Wochen keine Veränderungen, während Beschichtungen mit der Legierung OSU 3552 sowohl dick wie dünn bei einer Versiegelung mit einem ketongelösten Bakelitlack bereits nach 21,5 Stunden flächigen Rotrost zeigten. Bei einer Versiegelung mit einem Zweikomponenten-Epoxidharz wurde nach 21,5 Stunden noch keine Veränderung beobachtet und erst nach einer Woche trat flächiger Rotrost auf.

Die Spritzschichten aus dem Werkstoff OSU 3552 sind somit mit geeigneter Versiegelung bereits recht beständig gegen das Korrosionsmedium. Mit dem acetongelösten Bakelit versiegelt versagen diese Proben deutlich früher als mit dem Zweikomponenten-Epoxid versiegelt. Spritzschichten aus dem teuren OSU 0602 in verschiedenen Schichtdicken sind demgegenüber mit beiden Versieglersorten im Salzsprühklima nach DIN 50021 SS beständiger.

## Patentansprüche

1. Verfahren zur Herstellung von verschleiß- und/oder korrosionsfesten Oberflächenbeschichtungen durch thermisches Spritzen von Stahllegierungen auf Bauteilen aus niedriglegierten Stahllegierungen unter Verwendung von Fülldrähten bestehend aus einer Stahlhülle und einer pulverförmigen Füllung, welche die der Stahlhülle fehlenden Komponenten der OberRächenbeschichtung enthält, so dass die resultierende Legierung
• 26 bis 34 Gew.-% Chrom,
• 4 bis 8 Gew.-% Silizium,
• 1 bis 2,5 Gew.-% Bor,
• 1 bis 7,5 Gew.-% Molybdän,
• 1 bis 4 Gew.-% Mangan,
• bis 0,15 Gew.-% Kohlenstoff,
• bis 30 Gew.-% Nickel
und der Rest, mindestens jedoch 10 Gew.-% Eisen einschließlich der nicht vermeidbaren Verunreinigungen enthält.

2. Verfahren gemäß Anspruch 1, **dadurch gekennzeichnet, dass** die Hülle aus einem nahtlosen Rohr, einem geschweißten Rohr oder aus einem gefalzten Band besteht.

3. Verfahren gemäß Anspruch 1 oder 2, **dadurch gekennzeichnet, dass** die Füllung Eisen, Chrom, Silizium, Bor, Molybdän, Niobium, Mangan, Kohlenstoff, Nickel, Kobalt, Cer, Hafnium, Zirkonium und/oder Yttrium enthält.

4. Verfahren gemäß einem der Ansprüche 1 bis 3, **dadurch gekennzeichnet, dass** die resultierende Legierung zusätzlich auf Kosten des Eisens enthält
• bis 5 Gew.-% Niobium,
• bis 4 Gew.-% Kobalt,
• bis 0,5 Gew.-% Cer,
• bis 0,5 Gew.-% Hafnium,
• bis 0,5 Gew.-% Zirkonium,
• bis 1 Gew.-% Yttrium.

5. Verfahren gemäß einem der Ansprüche 1 bis 4, **dadurch gekennzeichnet, dass** der Fülldraht aufgespritzt wird durch Lichtbogen-Drahtspritzen oder Flamm-Drahtspritzen.

6. Verfahren gemäß einem der Ansprüche 1 bis 5, **dadurch gekennzeichnet, dass** die aufgespritzte Oberflächenbeschichtung zusätzlich versiegelt wird mit einem Zweikomponenten-Epoxidharz.

7. Fülldraht zur Durchführung des Verfahrens gemäß einem der Ansprüche 1 bis 6, bestehend aus einer Stahlhülle und einer pulverförmigen Füllung, welche die der Stahlhülle fehlenden Komponenten der Oberflächenbeschichtung enthält und die Hülle und die Füllung zusammen enthalten
• 26 bis 34 Gew.-% Chrom,
• 4 bis 8 Gew.-% Silizium,
• 1 bis 2,5 Gew.-% Bor,
• 1 bis 7,5 Gew.-% Molybdän,
• 1 bis 4 Gew.-% Mangan,
• bis 0,15 Gew.-% Kohlenstoff,
• bis 30 Gew.-% Nickel
und der Rest, mindestens jedoch 10 Gew.-% Eisen einschließlich der nicht vermeidbaren Verunreinigungen enthält.

## Claims

1. A process for the preparation of wear-resistant and/or corrosion-resistant surface coatings by the thermal spraying of steel alloys onto structural parts made of low-alloy steel alloys by using filling wires consisting of a steel sheath and a powdery filling which contains the components of the surface coating which are lacking in the steel sheath, so that the resulting alloy contains
• from 26 to 34% by weight of chromium;
• from 4 to 8% by weight of silicon;
• from 1 to 2.5% by weight of boron;
• from 1 to 7.5% by weight of molybdenum;
• from 1 to 4% by weight of manganese;
• up to 0.15% by weight of carbon;
• up to 30% by weight of nickel;
and the balance, but at least 10% by weight, being iron including the unavoidable impurities.

2. The process according to claim 1, **characterized in that** said sheath consists of a seamless tube, a welded tube or a seamed ribbon.

3. The process according to claim 1 or 2, **characterized in that** said filling contains iron, chromium, silicon, boron, molybdenum, niobium, manganese, carbon, nickel, cobalt, cerium, hafnium, zirconium and/or yttrium.

4. The process according to any of claims 1 to 3, **characterized in that** the resulting alloy additionally contains:
• up to 5% by weight of niobium;
• up to 4% by weight of cobalt;
• up to 0.5% by weight of cerium;
• up to 0.5% by weight of hafnium;
• up to 0.5% by weight of zirconium;
• up to 1% by weight of yttrium.

5. The process according to any of claims 1 to 4, **characterized in that** said filling wire is sprayed on by arc wire spraying or flame wire spraying.

6. The process according to any of claims 1 to 5, **characterized in that** the sprayed-on surface coating is additionally sealed with a two-component epoxy resin.

7. A filling wire for performing the process according to any of claims 1 to 6, consisting of a steel sheath and a powdery filling which contains the components of the surface coating which are lacking in the steel sheath, the sheath and the filling together containing:
• from 26 to 34% by weight of chromium;
• from 4 to 8% by weight of silicon;
• from 1 to 2.5% by weight of boron;
• from 1 to 7.5% by weight of molybdenum;
• from 1 to 4% by weight of manganese;
• up to 0.15% by weight of carbon;
• up to 30% by weight of nickel;
and the balance, but at least 10% by weight, being iron including the unavoidable impurities.

## Revendications

1. Procédé de réalisation de revêtements de surface, résistant à l'usure et/ou à la corrosion, par pulvérisation thermique d'alliages d'acier sur des composants en alliages d'acier faiblement allié en utilisant des fils fourrés constitués d'une enveloppe en acier et un remplissage pulvérulent qui contient les composants du revêtement de surface qui sont absents de l'enveloppe d'acier de sorte que l'alliage résultant contient:
- 26 à 34% en poids de chrome,
- 4 à 8% en poids de silicium,
- 1 à 2,5% en poids de bore,
- 1 à 7,5% en poids de molybdène,
- 1 à 4% en poids de manganèse,
- jusqu'à 0,15% en poids de carbone,
- jusqu'à 30% en poids de nickel
et le reste contient cependant au moins 10% en poids de fer incluant des impuretés inévitables.

2. Procédé selon la revendication 1, **caractérisé en ce que** l'enveloppe est constituée par un tube sans soudure, un tube soudé ou une bande repliée.

3. Procédé selon la revendication 1 ou 2, **caractérisé en ce que** le remplissage contient du fer, du chrome, du silicium, du bore, du molybdène, d'une niobium, du manganèse, du carbone, du nickel, du cobalt, du cérium, du hafnium, du zirconium et/ou de l'yttrium.

4. Procédé selon l'une des revendications 1 à 3, **caractérisé en ce que** l'alliage résultant contient en plus :
- jusqu'à 5% en poids de niobium,
- jusqu'à 4% en poids de cobalt,
- jusqu'à 0,5% en poids de cérium,
- jusqu'à 0,5% en poids de hafnium,
- jusqu'à 0,5% en poids de zirconium,
- jusqu'à 1% en poids d'yttrium.

5. Procédé selon l'une des revendications 1 à 4, **caractérisé en ce que** le fil fourré est appliqué par pulvérisation de fil à l'arc électrique ou par pulvérisation de fil à la flamme.

6. Procédé selon l'une des revendications 1 à 5, **caractérisé en ce que** le revêtement de surface appliqué par pulvérisation est scellé en plus avec une résine époxy à deux composants.

7. Fil fourré destiné à réaliser le procédé selon l'une des revendications 1 à 6, le fil fourré étant constitué par une enveloppe d'acier et par un remplissage pulvérulent qui contient les composants du revêtement de surface qui sont absents de l'enveloppe d'acier, et l'enveloppe et le remplissage contiennent ensemble:
- 26 à 34% en poids de chrome,
- 4 à 8% en poids de silicium,
- 1 à 2,5% en poids de bore,
- 1 à 7,5% en poids de molybdène,
- 1 à 4% en poids de manganèse,
- jusqu'à 0,15% en poids de carbone,
- jusqu'à 30% en poids de nickel
et le reste contient cependant au moins 10% en poids de fer incluant des impuretés inévitables.
